# EUROPÄISCHE PATENTANMELDUNG

(11) **EP 1 440 617 A1**
(43) Veröffentlichungstag der Anmeldung: **28.07.2004**
(21) Anmeldenummer: 04100155.3
(22) Anmeldetag: 20.01.2004
(51) Int. Cl.: A01D 69/00, A01D 41/14

(54) **Antriebssystem für einen Erntevorsatz einer Erntemaschine**

(30) Priorität: 24.01.2003 DE 10302692
(71) Anmelder: Maschinenfabrik Kemper GmbH & Co. KG, 48973 Stadtlohn (DE)
(72) Erfinder: Rickert, Clemens, 48703, Stadtlohn (DE)
(74) Vertreter: Holst, Sönke, Dr.

(57) **Zusammenfassung**

Die Erfindung bezieht sich auf ein Antriebssystem für einen Erntevorsatz (42) einer Erntemaschine (10), die ein Fahrgestell (22) umfasst, an dem ein Einzugsgehäuse befestigt ist, an dessen Frontseite eine gegenüber dem Fahrgestell (22) bewegliche Befestigungseinrichtung angebracht ist, an der ein Rahmen (66) des Erntevorsatzes (42) abnehmbar befestigbar ist, wobei das Antriebssystem eine von der Erntemaschine (10) in Drehung versetzbare Erntevorsatzantriebswelle (98) umfasst, an die eine Antriebswelle (78) des Erntevorsatzes (42) ankoppelbar ist.

Es wird vorgeschlagen, dass die Erntevorsatzantriebswelle (78) an der Befestigungseinrichtung angebracht ist.

## Beschreibung

Die Erfindung betrifft ein Antriebssystem für einen Erntevorsatz einer Erntemaschine, die ein Fahrgestell umfasst, an dem ein Einzugsgehäuse befestigt ist, an dessen Frontseite eine gegenüber dem Fahrgestell bewegliche Befestigungseinrichtung angebracht ist, an der ein Rahmen des Erntevorsatzes abnehmbar befestigbar ist, wobei das Antriebssystem eine von der Erntemaschine in Drehung versetzbare Erntevorsatzantriebswelle umfasst, an die eine Antriebswelle des Erntevorsatzes ankoppelbar ist.

Im Stand der Technik werden Schneidwerke für Mähdrescher in der Regel über Gelenkwellen angetrieben, die sich zwischen einer Erntevorsatzantriebswelle, die mit der unteren Schrägfördererwalze gekoppelt ist, und einem oder beiden seitlichen Enden des Erntevorsatzes erstrecken, d. h. im Wesentlichen quer zur Fahrtrichtung (s. DE 199 18 550 A). Insbesondere, falls das Schneidwerk an seiner Aufhängung am Schrägförderer eine Pendelbewegung um eine horizontale, in Fahrtrichtung verlaufende Achse vollführen soll, finden teleskopierbare Gelenkwellen Verwendung. Bevor das Schneidwerk zum Transport vom Mähdrescher getrennt werden kann, ist die Gelenkwelle manuell vom Schrägförderer abzunehmen und vor der Aufnahme eines weiteren Erntevorgangs wieder anzubringen, was einen nicht unerheblichen Zeitaufwand bedeutet.

Einige Typen von Erntevorsätzen, insbesondere zur Maisernte, sind mit in eine Transportstellung hochschwenkbaren Seitenteilen versehen, die an einem Mittelteil angelenkt sind. Bei diesen Erntevorsätzen erstreckt sich in der Regel eine teleskopierbare Gelenkwelle zwischen der Erntevorsatzantriebswelle des Einzugsgehäuses und dem äußeren Rand des Mittelteils. Die Gelenkwelle treibt eine Antriebswelle des Mittelteils an, die mit den einzelnen Einzugs- und Pflückeinrichtungen in Antriebsverbindung steht. Die Antriebswellen der Seitenteile werden wiederum durch lösbare Kupplungen mit der Antriebswelle des Mittelteils verbunden. Beim Hochschwenken der Außenteile werden die Kupplungen selbsttätig aufgetrennt. Sie schließen sich beim Herunterschwenken selbsttätig wieder. Als nachteilig ist anzusehen, dass die Gelenkwelle wegen des recht geringen zur Verfügung stehenden Raums - insbesondere bei Erntevorsätzen, die pendelnd an einem Hangmähdrescher angebracht sind - einen relativ hohen Winkel- und Längenänderungsbereich ermöglichen muss. Es sind daher recht aufwändige und kostenintensive Gelenkwellen erforderlich.

Bei anderen Ausführungsformen ist der Schrägförderer durch kurze Wellen mit lösbaren Kupplungen des Erntevorsatzes gekoppelt, die mit Gelenkwellen verbunden sind. Die Gelenkwellen treiben die Seitenteile an, welche wiederum durch weitere lösbare Kupplungen mit den angetriebenen Einrichtungen des Mittelteils in Antriebsverbindung stehen. Beim Hochschwenken der Seitenteile werden die Kupplungen selbsttätig aufgetrennt. Sie schließen sich beim Herunterschwenken auch selbsttätig wieder. Derartige Erntevorsätze können jedoch keine Pendelbewegung durchführen. Bei wiederum anderen Ausführungsformen ist eine teleskopierbare Gelenkwelle zwischen dem Schrägförderer und den Außenseiten vorhanden. Sie ermöglicht zwar eine Pendelbewegung, erfordert jedoch ein manuelles Abnehmen der Gelenkwelle, bevor die Seitenteile in die Transportposition verbracht werden können.

In der US 6 370 853 B wird ein Antriebssystem für die Reiheneinheiten eines Maispflückers beschrieben. An einer sich quer zur Fahrtrichtung des Mähdreschers erstreckenden, an der Vorderseite des Schrägförderers angebrachten Ausgangswelle ist ein Winkelgetriebe angebracht, von dem sich eine Welle nach vorn zum Maispflücker erstreckt. Dort treibt sie über ein Winkelgetriebe ein Schaltgetriebe an, das wiederum über ein schwenkbar am Pflücker angelenktes Winkelgetriebe und eine sich in Fahrtrichtung erstreckende Welle die quer zur Fahrtrichtung verlaufende Hauptantriebswelle zum Antrieb der Reiheneinheiten antreibt. Eine Pendelbewegung des Maispflückers am Schrägförderer wird nicht erwähnt und wäre aufgrund der Getriebeanordnung auch nicht möglich.

Das der Erfindung zu Grunde liegende Problem wird darin gesehen, ein verbessertes Antriebssystem für einen Erntevorsatz bereitzustellen, bei dem die oben erwähnten Nachteile nicht oder nur in einem verminderten Maß vorliegen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, die Erntevorsatzantriebswelle an der Befestigungseinrichtung anzubringen, an welcher der Erntevorsatz befestigbar ist. Somit erreicht man, dass sich die Erntevorsatzantriebswelle gemeinsam mit der Befestigungseinrichtung und dem Erntevorsatz gegenüber dem Fahrgestell der Erntemaschine bewegen kann, wenn der Erntevorsatz eine Pendelbewegung gegenüber dem Fahrgestell der Erntemaschine vollführt.

Auf diese Weise wird die Antriebsverbindung zwischen der Erntemaschine und dem Erntevorsatz von der Bewegung des Erntevorsatzes und der Befestigungseinrichtung unabhängig. Die Antriebsverbindung zwischen der Erntevorsatzantriebswelle der Erntemaschine und der Antriebswelle des Erntevorsatzes kann relativ einfach gestaltet werden. Eine teleskopierbare Gelenkwelle ist für diesen Zweck nicht mehr unbedingt erforderlich.

Die Erntevorsatzantriebswelle kann sich horizontal und quer zur Fahrtrichtung der Erntemaschine erstrecken, ähnlich wie bei konventionellen Antriebssystemen für Erntevorsätze. Dadurch besteht die Möglichkeit, die Erntemaschine auch mit herkömmlichen Erntevorsätzen zu betreiben, deren Antriebswellen mit der Erntevorsatzantriebswelle koppelbar sind. Möglich wären aber auch beliebige andere Orientierungen der Erntevorsatzantriebswelle.

Die Erntevorsatzantriebswelle wird in der Regel von der selbstfahrenden (oder mit einem Trägerfahrzeug verbundenen) Erntemaschine her angetrieben. Dabei findet vorzugsweise eine Verbindungswelle Verwendung, die sich von einer Erntemaschinenabtriebswelle der Erntemaschine her entlang der Fahrtrichtung bis zu einer Antriebsverbindung mit der Erntevorsatzantriebswelle hin erstreckt. Es wäre auch denkbar, anstelle der genannten Verbindungswelle eine beliebige andere Drehmomentübertragungseinrichtung zu verwenden, wie ein Zugmittelgetriebe (z. B. Kette, Keilriemen oder Zahnriemen) oder ein hydrostatisches Getriebe.

Um die Möglichkeit bereitzustellen, das Fahrgestell der Erntemaschine beim Abernten eines quer zur Fahrtrichtung geneigten Geländes (Hang) durch eine Verstellung der Räder gegenüber dem Körper der Erntemaschine horizontal zu stellen, den Erntevorsatz dabei aber parallel zum Boden auszurichten, ist es sinnvoll, die Befestigungseinrichtung um eine sich zumindest etwa in der Fahrtrichtung der Erntemaschine erstreckende Pendelachse schwenkbar am Einzugsgehäuse der Erntemaschine anzulenken. Die Pendelachse kann sich unter- oder oberhalb des im Einzugsgehäuse definierten Einzugskanals für das Erntegut befinden. Durch Verwendung geeigneter Lagerungen (Rollen o. dgl.) und Führungselemente kann sich die Pendelachse auch in der Mitte des Einzugskanals befinden. Alternativ oder zusätzlich ist das Einzugsgehäuse um die Pendelachse schwenkbar am Fahrgestell der Erntemaschine angelenkt und starr mit der Befestigungseinrichtung verbunden.

Bei derartigen Ausführungsformen bestehen mehrere Möglichkeiten, den Antrieb der Erntevorsatzantriebswelle zu realisieren. Bei einer ersten Ausführungsform ist eine Verbindungswelle, die eine Antriebsverbindung zwischen einer Erntemaschinenabtriebswelle und der Erntevorsatzantriebswelle herstellt, koaxial zur Pendelachse angeordnet. Bei dieser Ausführungsform bleibt der Abstand zwischen der Erntemaschinenabtriebswelle und der Erntevorsatzantriebswelle unabhängig vom Pendelwinkel stets konstant, so dass sich eine Verwendung einer teleskopierbaren Welle an dieser Stelle prinzipiell erübrigt.

Bei einer anderen Ausführungsform ist die Verbindungswelle zwischen der Erntemaschinenabtriebswelle und der Erntevorsatzantriebswelle im Abstand von der Pendelachse angeordnet. Bei dieser Ausführungsform kann als Verbindungswelle eine Gelenkwelle mit variabler Länge Verwendung finden, d. h. eine teleskopierbare Gelenkwelle.

Da sich die Erntevorsatzantriebswelle und/oder die Erntemaschinenabtriebswelle bei verschiedenen Ausführungsformen der Erfindung quer zur Fahrtrichtung der Erntemaschine erstrecken, während die sie antriebsmäßig verbindende Verbindungswelle in der Fahrtrichtung erstreckt, ist die Verwendung eines Winkelgetriebes zwischen der Verbindungswelle einerseits und der Erntevorsatzantriebswelle und/oder der Erntemaschinenabtriebswelle andererseits sinnvoll. Ein derartiges Winkelgetriebe kann aus Kegelzahnrädern aufgebaut sein oder ein Schneckenrad und ein damit kämmendes Zahnrad umfassen.

Die Erfindung kann an beliebigen Erntemaschinen Verwendung finden, wie Feldhäckslern, Baumwollpflückern oder Mähdreschern. Besonders sinnvoll lässt sie sich an Hangmähdreschern einsetzen. Der Vorzug liegt insbesondere darin, dass die Möglichkeit besteht, die Erntevorsatzantriebswelle mit einem Mittelteil eines Erntevorsatzes antriebsmäßig zu verbinden, der einen Seitenteil aufweist, der in die Transportposition bewegbar ist. Dadurch kann, obwohl ein hinreichender Winkelbereich für die Bewegung des Erntevorsatzes gegenüber der Erntemaschine besteht, der Seitenteil in die Transportposition verbracht werden, ohne eine Gelenkwelle oder dgl. manuell abzunehmen.

In den Zeichnungen sind zwei nachfolgend näher beschriebene Ausführungsbeispiele der Erfindung dargestellt. Es zeigt:
- Fig. 1: eine schematische, teilgeschnittene Seitenansicht eines Mähdreschers mit einem Erntevorsatz,
- Fig. 2: eine perspektivische, schematische Ansicht einer ersten Ausführungsform eines Antriebssystems für den Erntevorsatz aus Figur 1, und
- Fig. 3: eine perspektivische, schematische Ansicht einer zweiten Ausführungsform eines Antriebssystems für den Erntevorsatz aus Figur 1.

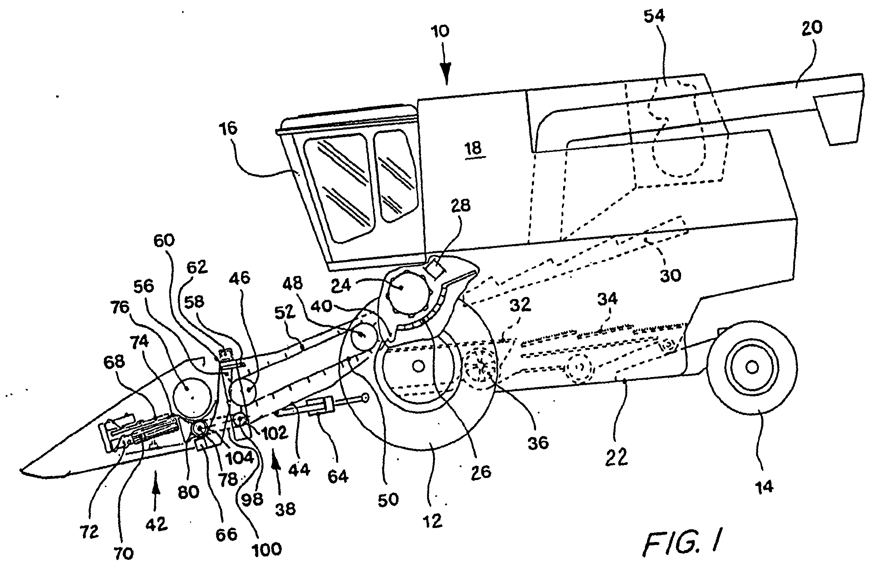

Eine in Figur 1 gezeigte Erntemaschine in der Form eines Mähdreschers 10 ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Fahrgestell 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt oder einem Strohhäcksler zugeführt werden und leichte Bestandteile mittels eines Gebläses 36 von den Sieben 34 ebenfalls auf den Boden geblasen werden.

Auf dem Boden liegendes oder stehendes Gut wird über einen als Einzugsgehäuse vorgesehenen Schrägförderer 38 und eine Steinfangmulde 40 der Dreschtrommel 24 zugeführt, nachdem es von einem Erntevorsatz 42 vom Boden aufgenommen worden ist. Der Schrägförderer 38 enthält innerhalb seines Gehäuses 44 eine untere Schrägfördererwalze 46 und eine obere Schrägfördererwalze 48, um die eine Förderkette 50 umläuft, die mit Mitnehmern 52 versehen ist. Die obere Schrägfördererwalze 48 wird von einem Verbrennungsmotor 54 des Mähdreschers 10 her in an sich bekannter und daher in der Zeichnung nicht näher dargestellter Weise über Riemen angetrieben, wie auch die Dreschtrommel 24 und die Schüttler 30.

An der in Fahrtrichtung vorderen Seite des Schrägförderers 38 ist ein so genannter Pendelschild 56 angeordnet. Der Pendelschild 56 ist ein rechteckiger Rahmen, der mit der vorderen Seite des Gehäuses 44 des Schrägförderers 38 um eine etwa horizontale, sich in der Fahrtrichtung erstreckende Schwenk- oder Pendelachse 58 drehbar verbunden ist. Es dient als Befestigungseinrichtung, an der ein Rahmen 66 des Erntevorsatzes 42 abnehmbar befestigbar ist.

An der Oberseite des Pendelschilds 56 sind mehrere Halterungselemente 60 in Form von nach vorn und oben überstehender Haken befestigt. Auf der Oberseite des Pendelschilds 56 liegt außerdem ein Querträger 62 des Rahmens des Erntevorsatzes 42 auf. Die Halterungselemente 60 verhindern, dass der Querträger 62 des Erntevorsatzes 42 vom Pendelschild 56 nach vorn abrutscht. Der Erntevorsatz 42 ist außerdem durch in der Zeichnung nicht dargestellte Verriegelungselemente mit der Unterseite des Pendelschilds 56 lösbar verbunden.

Der Erntevorsatz 42 ist an seinem oberen Ende um eine horizontale und quer zur Fahrtrichtung verlaufende, etwa mit der Drehachse der oberen Schrägfördererwalze 48 zusammenfallende Achse am Fahrgestell 22 schwenkbar gelagert und sein vorderes Ende ist durch einen Hydraulikzylinder 64, der sich zwischen dem unteren vorderen Ende des Gehäuses 44 des Schrägförderers 38 und dem Fahrgestell 22 erstreckt, höhenverstellbar.

Der Erntevorsatz 42 kann somit in an sich bekannter Weise vom Pendelschild 56 abgenommen werden, indem er auf einer Unterlage abgestellt, die Verriegelungselemente gelöst und der Schrägförderer 38 durch entsprechende Beaufschlagung des Hydraulikzylinders 64 weiter abgesenkt wird, so dass die Halterungselemente 60 unter dem Querträger 62 nach hinten weggezogen werden können. Die Wiederanbringung des Erntevorsatzes 42 erfolgt in umgekehrter Reihenfolge.

Bei dem Erntevorsatz 42 handelt es sich um einen Maispflücker, wie er z. B. in der DE 101 53 198 A näher beschrieben wurde. Er enthält eine Reihe von Einzugs- und Pflückeinheiten, die sich an einem Rahmen 66 abstützen, der mit dem Querträger 62 verbunden ist. Der Erntevorsatz 42 weist mehrere Einzugs- und Pflückeinrichtungen auf, die zum Einziehen von Pflanzen und zum Abtrennen ihrer Fruchtstände dienen. Die Einzugs- und Pflückeinrichtungen umfassen jeweils ein Einzugselement 68, das um eine etwa vertikal verlaufende Achse in Drehung versetzbar ist, sowie darunter angeordnete Paare von Pflückwalzen 70, von denen jeweils eine in ihrem vorderen Bereich mit Förderschnecken 72 ausgestattet ist.

Im Betrieb erfassen die Einzugselemente 68 auf dem Feld stehende Pflanzen und führen sie im Zusammenwirken mit den Förderschnecken 72 in einen Pflückspalt ein. Dort werden die Pflanzen nach unten eingezogen und die Fruchtstände mittels des Pflückspalts abgetrennt. Die Einzugselemente 68 führen die Fruchtstände auf einer Abdeckung 74 entlang und einer Querförderschnecke 76 zu, welche sie zur Mitte des Erntevorsatzes 42 fördert. Dort werden sie durch die mittige Öffnung des Pendelschilds 56 nach hinten abgegeben und durch die Mitnehmer 52 der Förderkette 50 des Schrägförderers 38 der Dreschtrommel 24 zugeführt.

Der Antrieb der beweglichen Elemente des Erntevorsatzes 42 erfolgt durch eine sich quer erstreckende Antriebswelle 78, die über zugeordnete Winkelgetriebe 80 die einzelnen Einzugs- und Pflückeinrichtungen antreibt.

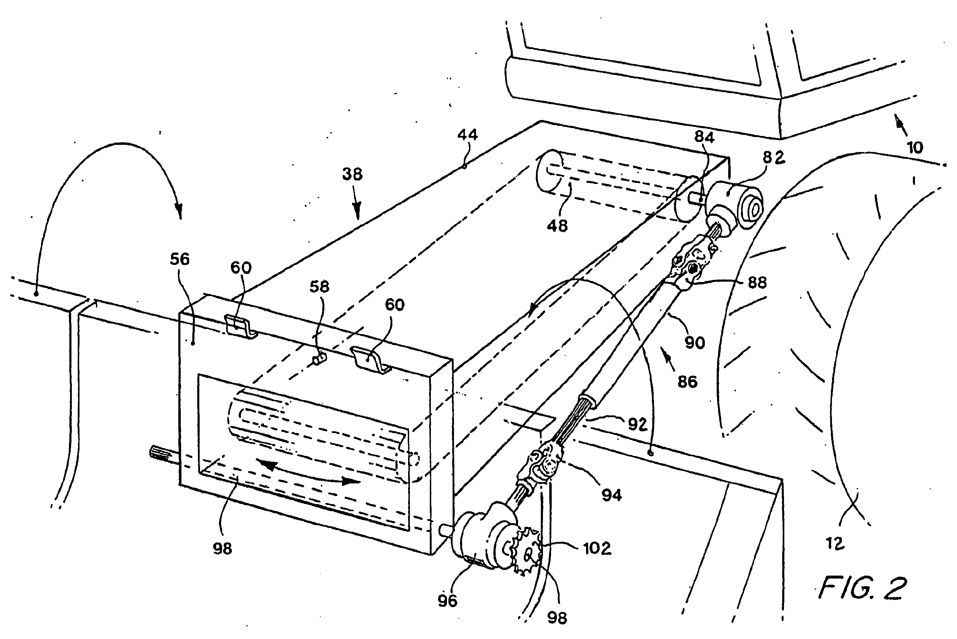

In der Figur 2 ist das Antriebssystem für den Erntevorsatz 42 perspektivisch dargestellt. Es umfasst ein erstes Winkelgetriebe 82, durch das sich die - als Erntemaschinenabtriebswelle vorgesehene - Welle 84 der oberen Schrägfördererwalze 48 erstreckt. Das Gehäuse des ersten Winkelgetriebes 82 ist starr mit dem Gehäuse 44 des Schrägförderers 38 verbunden. Abtriebsseitig treibt das erste Winkelgetriebe 82 eine sich in Fahrtrichtung nach vorn und vom ersten Winkelgetriebe 82 schräg nach unten erstreckende teleskopierbare Gelenkwelle 86 an, die als Verbindungswelle dient und sich aus einem ersten Kardangelenk 88, einer Hülse 90 mit nicht-kreisförmigem Innenquerschnitt, einer in der Hülse 90 axial verschiebbar angeordneten Stange 92 mit einem dem Innenquerschnitt der Hülse 90 entsprechenden Außenquerschnitt sowie einem zweiten Kardangelenk 94 zusammensetzt. Das zweite Kardangelenk 94 steht mit der Eingangswelle eines zweiten Winkelgetriebes 96 in Antriebsverbindung. Durch das zweite Winkelgetriebe 96 erstreckt sich eine horizontal und quer zur Fahrtrichtung verlaufende Erntevorsatzantriebswelle 98. Die Erntevorsatzantriebswelle 98 erstreckt sich auf beide Seiten des Pendelschilds 56. Das Gehäuse des zweiten Winkelgetriebes 96 ist am Pendelschild 56 befestigt und die Erntevorsatzantriebswelle 98 ist am Pendelschild drehbar gelagert und abgestützt. Auf die Enden der Erntevorsatzantriebswelle 98 ist jeweils ein Ritzel 102 aufgesetzt, um die eine Kette 100 umläuft, die auch um ein Ritzel 104 umläuft, das auf der Antriebswelle 78 befestigt ist. Anstelle des Kettentriebs zwischen der Erntevorsatzantriebswelle 98 und der Antriebswelle 78 könnte auch ein Riemen oder ein Antrieb mit kämmenden Zahnrädern oder einer Gelenkwelle oder eine beliebige andere Antriebsverbindung treten.

Beim Erntebetrieb bleibt der Erntevorsatz 42 parallel zum Erdboden ausgerichtet, da er sich auf Gleitkufen darauf abstützt bzw. durch ein aktives System mit Sensoren und Aktoren (einschließlich des Hydraulikzylinders 64 sowie eines anderen Hydraulikzylinders, der den Pendelschild 56 um die Pendelachse 58 verschwenkt) in einem konstanten Abstand oder mit einer definierten Auflagekraft über dem Erdboden geführt wird, wie an sich bekannt ist und deshalb keiner näheren Erläuterung bedarf.

Der Mähdrescher 10 ist mit einer Hangausrüstung ausgestattet, die durch eine Verstellung der Position der Räder 12 gegenüber dem Fahrgestell 22 bewirkt, dass das Fahrgestell 22 stets horizontal orientiert bleibt. Führt der Mähdrescher 10 somit einen Erntevorgang entlang eines Hanges durch, werden die Räder 12 an der hangabwärtigen Seite nach unten und die Räder 12 an der hangaufwärtigen Seite gegenüber dem Fahrgestell 22 nach oben bewegt. Die pendelnd aufgehängten hinteren Räder 14 folgen diesen Bewegungen zwangsweise. Gleichzeitig verschwenkt der Pendelschild 56 um die Pendelachse 58, wie durch den Pfeil in der Figur 2 angedeutet. Dabei bewegt sich das zweite Winkelgetriebe 96 mit dem Pendelschild 56. Die Bewegung des zweiten Winkelgetriebes 96 gegenüber dem ersten Winkelgetriebe 82 wird durch die teleskopierbare, mit zwei Kardangelenken 88, 94 ausgestattete Gelenkwelle 86 ermöglicht. Der Antrieb der Einzugs- und Pflückeinrichtungen erfolgt vom Verbrennungsmotor 54 über die Welle 84 der oberen Schrägfördererwalze 48, das erste Winkelgetriebe 82, die teleskopierbare Gelenkwelle 86, das zweite Winkelgetriebe 96, die Erntevorsatzantriebswelle 98, das Ritzel 102, die Kette 100, das Ritzel 104, die Antriebswelle 78 und die Winkelgetriebe 80.

Durch die Anbringung der Erntevorsatzantriebswelle 98 am Pendelschild 56 muss die Antriebsverbindung zwischen der Erntevorsatzantriebswelle 98 und der Antriebswelle 78 des Erntevorsatzes 42 - anders als im Sand der Technik, bei dem die Erntevorsatzantriebswelle 98 am Gehäuse des Schrägförderers 38 befestigt ist - keine Relativbewegung zwischen den genannten Wellen 98, 78 ermöglichen. Sie kann deshalb relativ einfach und preiswert ausgestaltet werden. Außerdem erübrigt sich eine Herstellung von unterschiedlichen Varianten von Erntevorsätzen 42 für Mähdrescher 10 mit bzw. ohne Hangausrüstung, da die Antriebswelle 78 mit der zeichnerisch dargestellten und beschriebenen (oder einer anderen, entsprechend angepassten) Antriebsverbindung zwischen Erntevorsatzantriebswelle 98 und Antriebswelle 78 auch mit der Erntevorsatzantriebswelle von Mähdreschern ohne Hangausrüstung verbunden werden kann, die sich seitlich neben der unteren Schrägfördererwalze 46 befindet.

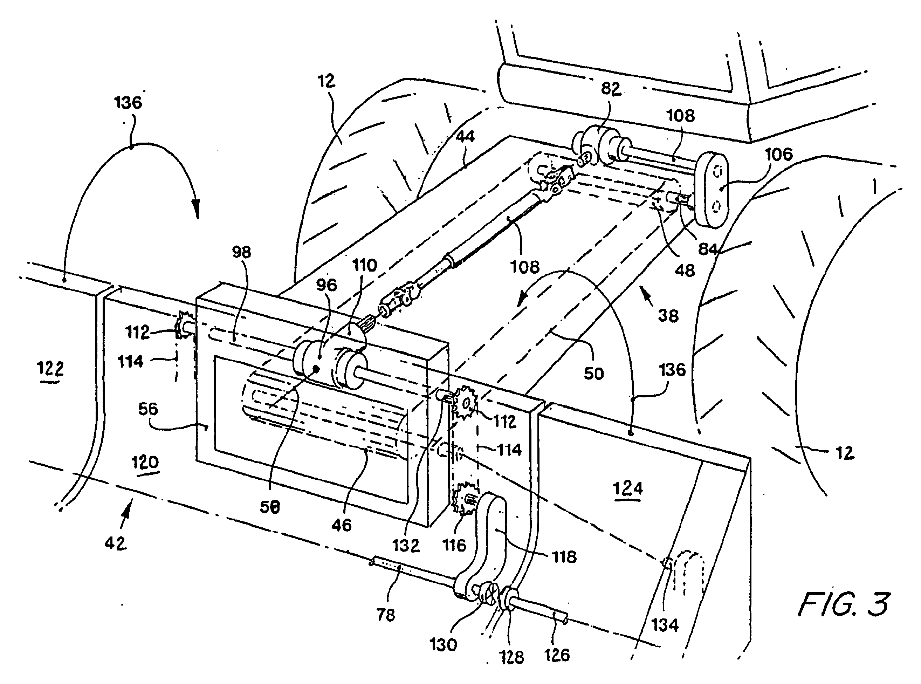

Eine zweite Ausführungsform des Antriebssystems für den Erntevorsatz 42 ist in der Figur 3 dargestellt. Mit der ersten Ausführungsform übereinstimmende Elemente sind mit denselben Bezugszeichen gekennzeichnet.

Die ebenfalls durch den Verbrennungsmotor 54 angetriebene, als Erntemaschinenabtriebswelle dienende Welle 84 der oberen Schrägfördererwalze 48 steht mit einem Zahnradgetriebe 106 in Antriebsverbindung, das eine Querwelle 108 antreibt. Die Querwelle 108 treibt das erste Winkelgetriebe 82 an, dessen Gehäuse oberhalb des Gehäuses 44 des Schrägförderers 38 befestigt ist. Vom ersten Winkelgetriebe 82 erstreckt sich eine Verbindungswelle 108 nach vorn und unten, die mit dem zweiten Winkelgetriebe 96 in Antriebsverbindung steht. Die Verbindungswelle 108 muss - anders als in der Figur 3 dargestellt - keine teleskopierbare, mit Kardangelenken ausgestattete Ausführungsform sein, da ihre Längsachse und die Pendelachse 58 koaxial angeordnet sind. Das Gehäuse des zweiten Winkelgetriebes 96 ist am Pendelschild 56 befestigt und sein sich nach hinten erstreckender Ansatz 110 wird von einer nicht eingezeichneten Lagerung umschlossen, die mit dem Gehäuse 44 des Schrägförderers 38 verbunden ist. Das Gehäuse des zweiten Winkelgetriebes 96 ist somit Teil der Pendellagerung des Pendelschilds 56.

Vom zweiten Winkelgetriebe 96 erstreckt sich die Erntevorsatzantriebswelle 98 horizontal und quer zur Fahrtrichtung bis zu den beiden Seiten des Pendelschilds 56. Dort sind Ritzel 112 angebracht, die über Ketten 114 und weitere Ritzel 116 Zahnradgetriebe 118 des Erntevorsatzes 42 antreiben, welche mit der Antriebswelle 78 des Erntevorsatzes 42 in Antriebsverbindung stehen. Die Antriebswelle 78 wird somit über die Welle 84, das Zahnradgetriebe 106, die Querwelle 108, das erste Winkelgetriebe 82, die Verbindungswelle 108, das zweite Winkelgetriebe 96, die Erntevorsatzantriebwelle 98, die Ritzel 112, die Ketten 114, die Ritzel 116 und die Zahnradgetriebe 118. Anstelle des Kettenantriebs kann eine beliebige andere Antriebsverbindung Verwendung finden.

Anhand der Figur 3 ist weiterhin erkennbar, dass sich der Erntevorsatz 42 aus einem Mittelteil 120 und zwei Seitenteilen 122, 124 zusammensetzt, die zum Transport auf einer Straße nach oben und innen schwenkbar sind, wie durch die Pfeile 136 angedeutet. Die Seitenteile 122, 124 weisen Antriebswellen 126 auf, die durch Kupplungshälften 128, 130 mit der Antriebswelle 78 des Mittelteils 120 koppelbar sind. Beim Verschwenken der Seitenteile 122, 124 in die Transportposition trennen sich die Kupplungshälften 128, 130 selbsttätig auf und sie treten wieder in Antriebsverbindung, wenn die Seitenteile 122, 124 zum Erntebetrieb wieder herunter geschwenkt werden.

Die in Figur 3 dargestellte Ausführungsform des Antriebssystems des Erntevorsatzes 42 ermöglicht, - auch bei einem zur Verwendung an einem Mähdrescher 10 mit Hangausrüstung geeigneten Erntevorsatz 42 - die Seitenteile 122, 124 in die Transportposition zu verschwenken, ohne dass eine Trennung der Antriebsverbindung zwischen der Erntevorsatzantriebswelle 98 und der Antriebswelle 78 des Erntevorsatzes 42 erforderlich wäre. Der Bediener braucht somit nicht aus der Fahrerkabine 16 herunterzusteigen, um die Antriebsverbindung zu lösen, was den Übergang zwischen Erntebetriebs- und Transportstellung des Erntevorsatzes 42 wesentlich beschleunigt. Selbstverständlich kann auch der in Figur 1 dargestellte Erntevorsatz mit hochschwenkbaren Seitenteilen 122 und 124 ausgestattet werden, deren Antriebswellen durch Kupplungshälften 128, 130 mit der Antriebswelle 78 des Mittelteils 120 lösbar verbindbar sind, da auch dort die Antriebswelle 78 in der Nähe des Pendelschilds 56, und somit am Mittelteil, angetrieben wird.

In der Figur 3 ist auch das Antriebssystem eines Erntevorsatzes 42 gemäß des Standes der Technik gestrichelt dargestellt. Es umfasst einen von der Welle der unteren Schrägfördererwalze 46 ausgehenden Anschluss 132, der über eine teleskopierbare Gelenkwelle mit einem Anschluss 134 an der Außenseite des Seitenteils 124 verbunden wird. Die teleskopierbare Gelenkwelle ist erforderlich, um die Pendelbewegung des Erntevorsatzes 42 um die Pendelachse 58 zu ermöglichen. Somit ist im Stand der Technik ein Abnehmen der Gelenkwellen erforderlich, das sich durch die Erfindung erübrigt.

Ein konventioneller Erntevorsatz kann an die Erntevorsatzantriebswelle 98 oder an den Anschluss 132 angeschlossen werden, falls letzterer an dem Mähdrescher 10 mit einem erfindungsgemäßen Antriebssystem des Erntevorsatzes für diesen Zweck vorgesehen wird.

## Patentansprüche

1. Antriebssystem für einen Erntevorsatz (42) einer Erntemaschine (10), die ein Fahrgestell (22) umfasst, an dem ein Einzugsgehäuse befestigt ist, an dessen Frontseite eine gegenüber dem Fahrgestell (22) bewegliche Befestigungseinrichtung angebracht ist, an der ein Rahmen (66) des Erntevorsatzes (42) abnehmbar befestigbar ist, wobei das Antriebssystem eine von der Erntemaschine (10) in Drehung versetzbare Erntevorsatzantriebswelle (98) umfasst, an die eine Antriebswelle (78) des Erntevorsatzes (42) ankoppelbar ist, **dadurch gekennzeichnet, dass** die Erntevorsatzantriebswelle (78) an der Befestigungseinrichtung angebracht ist.

2. Antriebssystem nach Anspruch 1, **dadurch gekennzeichnet, dass** die Erntevorsatzantriebswelle (98) sich horizontal und quer zur Fahrtrichtung erstreckt.

3. Antriebssystem nach Anspruch 1 oder 2, **dadurch gekennzeichnet, dass** die Erntevorsatzantriebswelle (98) über eine sich in Fahrtrichtung erstreckende Verbindungswelle (86, 108) mit einer sie antreibenden Erntemaschinenabtriebswelle (84) verbunden ist.

4. Antriebssystem nach einem der Ansprüche 1 bis 3, **dadurch gekennzeichnet, dass** die Befestigungseinrichtung um eine sich zumindest näherungsweise in der Fahrtrichtung der Erntemaschine (10) erstreckende Pendelachse (58) schwenkbar am Einzugsgehäuse angelenkt ist.

5. Antriebssystem nach Anspruch 4, **dadurch gekennzeichnet, dass** sich die Verbindungswelle (108) koaxial zur Pendelachse (58) erstreckt.

6. Antriebssystem nach Anspruch 4 oder 5, **dadurch gekennzeichnet, dass** die Verbindungswelle eine Gelenkwelle (86) mit variabler Länge ist.

7. Antriebssystem nach Anspruch 5 oder 6, **dadurch gekennzeichnet, dass** die Verbindungswelle (86, 108) über ein Winkelgetriebe (96) mit der Erntevorsatzantriebswelle (98) verbunden ist.

8. Erntemaschine (10) mit einem Antriebssystem nach einem der vorhergehenden Ansprüche.

9. Erntemaschine (10) mit einem Erntevorsatz (42) und einem Antriebssystem nach einem der Ansprüche 1 bis 8, **dadurch gekennzeichnet, dass** der Erntevorsatz (42) einen an der Befestigungseinrichtung anbringbaren Mittelteil (120) und mindestens einen am Mittelteil (120) angebrachten, gegenüber dem Mittelteil (120) in eine Transportposition verbringbaren Seitenteil (122, 124) umfasst, und dass die Antriebswelle (78) des Mittelteils (120) mit der Erntevorsatzantriebswelle (98) koppelbar ist, so dass der Seitenteil ohne Abtrennung der Antriebsverbindung zwischen der Antriebswelle (78) des Mittelteils (120) und der Erntevorsatzantriebswelle in die Transportposition verbringbar ist.

10. Erntemaschine nach Anspruch 9, **dadurch gekennzeichnet, dass** die Erntemaschine (10) mit einer Hangausrüstung versehen ist, die das Fahrgestell (22) beim Befahren eines Hangs durch Verstellen der Räder (12, 14) horizontal orientiert hält.
